# EUROPEAN PATENT SPECIFICATION

(11) **EP 3 597 139 B1**
(45) Date of publication and mention of the grant of the patent: **04.10.2023**
(21) Application number: 18768498.0
(22) Date of filing: 08.03.2018
(51) Int. Cl.: A61C 1/02, A61C 1/06, A61C 5/44, A61C 5/48

(54) **ROOT CANAL TREATMENT DEVICE**
WURZELKANALBEHANDLUNGSVORRICHTUNG
DISPOSITIF DE TRAITEMENT DE CANAL RADICULAIRE

(30) Priority: 14.03.2017 JP 2017048655
(43) Date of publication of application: 22.01.2020
(73) Proprietor: J. Morita MFG. Corp., Kyoto-shi, Kyoto 612-8533 (JP)
(72) Inventor: KATO, Kyohei, Kyoto-shi Kyoto 612-8533 (JP); KATSUDA, Naoki, Kyoto-shi Kyoto 612-8533 (JP); YAMASHITA, Seiichiro, Kyoto-shi Kyoto 612-8533 (JP); MATOBA, Kazunari, Kyoto-shi Kyoto 612-8533 (JP)
(74) Representative: Müller Hoffmann & Partner
(86) International application number: PCT/JP2018/008962
(87) International publication number: WO 2018/168636

(56) References cited:
- JP-A- 2005 144 194
- JP-A- 2005 144 194
- JP-A- 2015 058 274
- JP-A- 2016 198 191
- US-A- 5 980 248
- US-A1- 2015 086 941

## Description

### TECHNICAL FIELD

The present invention relates to a root canal treatment apparatus configured to treat a root canal of a tooth.

### BACKGROUND ART

In a conventional root canal treatment apparatus, a root canal is cut by rotating a cutting tool (hereinafter, also referred to as "file") having a spirally-formed blade. Furthermore, in a root canal treatment apparatus described in Japanese Patent Laying-Open No. 09-038108 (PTD 1), in cutting a root canal by rotating a file in a forward rotation direction, such control is carried out that the file is rotated in a reverse rotation direction or rotation is stopped when a predetermined set position (position of a root apex) is reached. In addition, in the root canal treatment apparatus described in PTD 1, such control is carried out that the file is rotated in the reverse rotation direction or rotation is stopped in order to avoid breakage of the file, when a load (for example, torque) applied to the file exceeds a set load.

Furthermore, as a drive method for avoiding a failure of a file, a method for driving a file by repeating forward rotation which is rotation in a cutting direction and reverse rotation which is rotation in a non-cutting direction is disclosed in Japanese National Patent Publication No. 2003-504113 (PTD 2). In a root canal treatment apparatus described in PTD 2, the file is driven by constantly repeating forward rotation and reverse rotation, and thus, the time to drive the file with reverse rotation that does not contribute to cutting is inevitably included, which leads to reduction in cutting efficiency.

US 2015/ 086941 A1 discloses a method of driving a cutting tool of a root canal treatment apparatus wherein in dependence of the progress of cutting, the manner of driving as defined both in a forward and in a backward direction is changed.

### CITATION LIST

### PATENT DOCUMENT

PTD 1: Japanese Patent Laying-Open No. 09-038108
PTD 2: Japanese National Patent Publication No. 2003-504113

### SUMMARY OF INVENTION

### TECHNICAL PROBLEM

In a root canal treatment apparatus, when a file is rotated in a forward rotation direction which is a cutting direction, shavings generated by cutting are discharged to the outside of a root canal along a spirally-formed blade. However, when the file is rotated in a reverse rotation direction, shavings generated by cutting are pushed back in a direction of a root apex along the spirally-formed blade. Particularly, when rotation of the file is stopped at a position of the root apex and the file is pulled out of the root canal, the file is sometimes rotated in the reverse rotation direction in order to release biting of the blade of the file into a root canal wall. However, when the file is rotated in the reverse rotation direction, the shavings are pushed back in the direction of the root apex, and thus, the shavings are likely to be left near the root apex. When treatment is performed with the shavings contaminated by bacteria propagating on the root canal wall being left near the root apex, healing is prevented or root canal treatment is needed again.

A root canal is curved in many cases and cutting along this curved root canal is required, and thus, a superelastic material such as nickel titanium is often used for the file. However, when an excessive load is applied to the file, the file may be broken. When the file is broken, a fragment of the broken file is left in the root canal, and removal of this fragment is not easy and a tooth itself must be removed in some cases. Furthermore, drive for rotating the file in the reverse rotation direction is performed in order to suppress the excessive load applied to the file and avoid breakage of the file. However, when the file is rotated in the reverse rotation direction, shavings generated by cutting are pushed back in the direction of the root apex along the spirally-formed blade. Therefore, the contaminated shavings are left near the root apex, which may reduce a success rate of root canal treatment.

The present invention has been made to solve the above-described problem, and an object of the present invention is to provide a root canal treatment apparatus in which biting of a blade of a cutting tool (file) into a root canal wall can be released and push-back of shavings in a direction of a root apex can be suppressed, when a position of a tip end of the cutting tool reaches a predetermined set position and rotation of the cutting tool is stopped.

### SOLUTION TO PROBLEM

The above problem is solved by the subject-matter of the independent claim.

A root canal treatment apparatus according to the present invention includes: a handpiece configured to hold a cutting tool in a head in a drivable manner; a drive portion configured to drive the cutting tool, with rotation in a direction in which the cutting tool cuts an object to be cut being defined as forward rotation and rotation in a direction opposite to the forward rotation being defined as reverse rotation; a root canal length measurement portion configured to electrically detect a position of a tip end of the cutting tool in a root canal, using the cutting tool as a measuring electrode; and a control portion configured to control the drive portion so as to perform drive for reversely rotating the cutting tool by a predetermined set angle when the position of the tip end of the cutting tool detected by the root canal length measurement portion reaches a predetermined set position, and then, stopping rotation.

### ADVANTAGEOUS EFFECTS OF INVENTION

In the root canal treatment apparatus according to the present invention, drive for reversely rotating the cutting tool by the predetermined set angle when the detected position of the tip end of the cutting tool reaches the predetermined set position, and then, stopping rotation is performed. Therefore, push-back of shavings in a direction of a root apex (particularly, push-out of contaminated shavings from a portion close to a root apex) can be avoided, and biting of a blade of the cutting tool into a root canal wall can be released, which makes it easy to pull the cutting tool out of the root canal.

### BRIEF DESCRIPTION OF DRAWINGS

Fig. 1 is a conceptual diagram for illustrating movement of a cutting tool driven by a root canal treatment apparatus according to a first embodiment of the present invention.
Fig. 2 is a flowchart for illustrating control in the root canal treatment apparatus according to the first embodiment of the present invention.
Fig. 3 is a schematic diagram showing a feature of appearance of the root canal treatment apparatus according to the first embodiment of the present invention.
Fig. 4 is a block diagram showing a functional configuration of the root canal treatment apparatus according to the first embodiment of the present invention.
Fig. 5 is a circuit diagram showing a circuit configuration of the root canal treatment apparatus according to the first embodiment of the present invention.
Fig. 6 is a schematic diagram showing a direction of rotation of the cutting tool.
Fig. 7 is a diagram showing an example of representation on a liquid crystal display panel provided in a display portion shown in Fig. 3.
Fig. 8 is a flowchart for illustrating control in a root canal treatment apparatus according to a second embodiment of the present invention.
Fig. 9 is a flowchart for illustrating control in a root canal treatment apparatus according to a third embodiment of the present invention.
Fig. 10 is a flowchart for illustrating control in a root canal treatment apparatus according to a fourth embodiment of the present invention.
Fig. 11 is a schematic diagram showing a construction of a root canal treatment apparatus of a cordless type.

### DESCRIPTION OF EMBODIMENTS

### (First Embodiment)

A root canal treatment apparatus according to a first embodiment of the present invention is a root canal treatment apparatus including a root canal enlargement and root canal length measurement system incorporating a handpiece. However, the root canal treatment apparatus described below is one example and is also applicable to a similarly configured dental treatment apparatus.

The root canal treatment apparatus according to the first embodiment enlarges a root canal by rotating a cutting tool (a file or a reamer) held by a head with a motor to cut a root canal wall of a tooth. By using the cutting tool as a measuring electrode, the root canal treatment apparatus can also electrically detect a position of a tip end of the cutting tool in a root canal. Therefore, the root canal treatment apparatus can control drive of the cutting tool in accordance with the position of the tip end of the cutting tool. Rotation in a direction in which the cutting tool cuts an object to be cut is referred to as forward rotation, and rotation in a direction opposite to the forward rotation is referred to as reverse rotation.

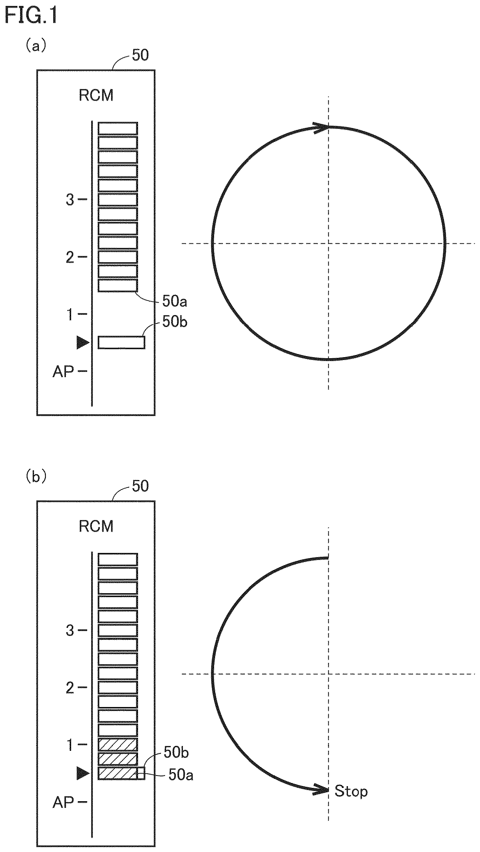

First, characteristic drive in the root canal treatment apparatus according to the first embodiment will be described with reference to the drawings. Fig. 1 is a conceptual diagram for illustrating movement of the cutting tool driven by the root canal treatment apparatus according to the first embodiment of the present invention. Fig. 1(a) shows drive of the cutting tool when the tip end of the cutting tool has not yet reached a set position, and Fig. 1(b) shows drive of the cutting tool when the tip end of the cutting tool has reached the set position. In Fig. 1, a clockwise rotation direction corresponds to a forward rotation direction, and a counterclockwise rotation direction corresponds to a reverse rotation direction.

A meter 50 in Fig. 1(a) shows the position of the tip end of the cutting tool measured electrically by a root canal length measurement circuit, and Fig. 1 shows a position 50a of the tip end of the cutting tool and a set position 50b at which rotation of the cutting tool is stopped. Set position 50b is, for example, a position of a root apex. In Fig. 1(a), the tip end of the cutting tool has not yet reached the set position, and thus, position 50a of the tip end of the cutting tool extending from the upper side in the figure has not yet reached set position 50b. Therefore, the root canal treatment apparatus carries out control for continuously rotating the cutting tool in the forward rotation direction as shown in Fig. 1(a). That is, the root canal treatment apparatus continues to perform drive with high cutting efficiency. Though an arrow shown in Fig. 1(a) is illustrated to end after rotation by 360 degrees in the forward rotation direction, actual drive is continuous drive in the forward rotation direction.

In Fig. 1(b), meter 50 shows that the tip end of the cutting tool has reached the set position, and thus, position 50a of the tip end of the cutting tool extending from the upper side in the figure has reached set position 50b. Therefore, the root canal treatment apparatus carries out control for stopping rotation of the cutting tool. However, if the root canal treatment apparatus stops rotation under this condition, it may be difficult to pull the cutting tool out of a root canal, because a blade of the cutting tool bites into a root canal wall. Accordingly, the root canal treatment apparatus needs to rotate the cutting tool in the reverse rotation direction in order to release the biting of the blade of the cutting tool into the root canal wall. However, when the cutting tool is simply rotated in the reverse rotation direction, shavings are pushed back in a direction of set position 50b (for example, a direction of the root apex), and further, contaminated shavings may overflow from the root apex to the outside, and thus, a favorable prognosis cannot be expected. When treatment is performed with shavings contaminated by bacteria propagating on the root canal wall being left near set position 50b, healing is prevented or root canal treatment is needed again.

The root canal treatment apparatus according to the first embodiment carries out control for rotating the cutting tool by 180 degrees in the reverse rotation direction as shown in Fig. 1(b), and then, stopping rotation. That is, the root canal treatment apparatus rotates the cutting tool in the reverse rotation direction by an angle required to release the biting of the blade of the cutting tool into the root canal wall. As a result, in this root canal treatment apparatus, the cutting tool can be pulled out of the root canal and an amount of shavings pushed back in the direction of set position 50b is reduced. The angle required to release the biting of the blade of the cutting tool into the root canal wall is set at any one of angles ranging from 30 degrees to 720 degrees. As long as the angle falls within this range, an amount of shavings pushed back in the direction of set position 50b is small, and an amount of contaminated shavings is small even if the shavings overflow from the root apex.

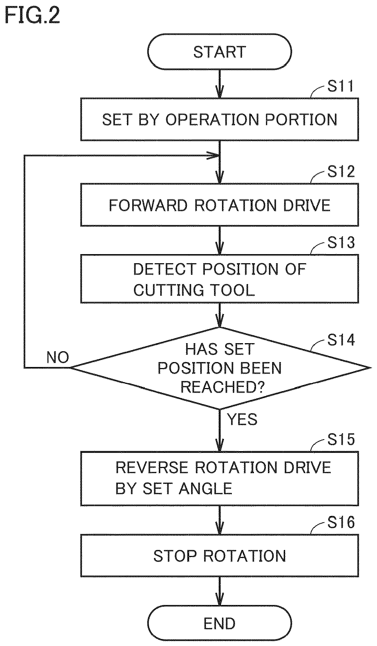

Next, control in the root canal treatment apparatus according to the first embodiment will be described with reference to a flowchart. Fig. 2 is a flowchart for illustrating control in the root canal treatment apparatus according to the first embodiment of the present invention. First, the root canal treatment apparatus (mainly a control portion, and the same applies to the following description) stores parameters including a set angle, a set position and the set number of rotations that are set by an operator operating the operation portion (step S11). Specifically, an angle by which the driving cutting tool is rotated in the reverse rotation direction before rotation of the cutting tool is stopped is set as the set angle, and the set angle is, for example, 180 degrees. A position at which rotation is stopped after rotation of the cutting tool in the reverse rotation direction is set as the set position, and the set position is, for example, a position of a root apex. The number of rotations when rotating the cutting tool in the forward rotation direction or reverse rotation direction is set as the set number of rotations, and the set number of rotations is, for example, 200 rpm (revolutions per minute). The number of rotations in the forward rotation direction may be different from the number of rotations in the reverse rotation direction. In addition, the set angle may be changed in accordance with the set number of rotations. For example, when the number of rotations is set at 200 rpm, the set angle is set at 180 degrees. When the number of rotations is set at 400 rpm, the set angle may be set at 360 degrees. Furthermore, the set angle is also changed in accordance with a load applied to the cutting tool and detected by a load detector. For example, when a load applied to the cutting tool and detected by the load detector is higher than a set load, the set angle is greatly changed from 180 degrees to 360 degrees, and when a load applied to the cutting tool and detected by the load detector is lower than the set load, the set angle is slightly changed from 180 degrees to 90 degrees.

Next, the root canal treatment apparatus performs drive for rotating the cutting tool in the forward rotation direction, based on an operation to start drive by an operator (step S12). The root canal treatment apparatus electrically detects a position of the tip end of the cutting tool using the root canal length measurement circuit, while rotating the cutting tool in the forward rotation direction (step S13). The root canal treatment apparatus determines whether or not the position of the tip end of the cutting tool detected in step S13 has reached the set position (step S14). When determining that the position of the tip end of the cutting tool has not yet reached the set position (NO in step S14), the root canal treatment apparatus returns the process to step S12 in order to maintain drive for rotating the cutting tool in the forward rotation direction.

When determining that the position of the tip end of the cutting tool has reached the set position (YES in step S14), the root canal treatment apparatus performs drive for reversely rotating the cutting tool by the set angle (step S15). After reversely rotating the cutting tool by the set angle in step S15, the root canal treatment apparatus stops rotation of the cutting tool (step S16).

### [Configuration of Root Canal Treatment Apparatus]

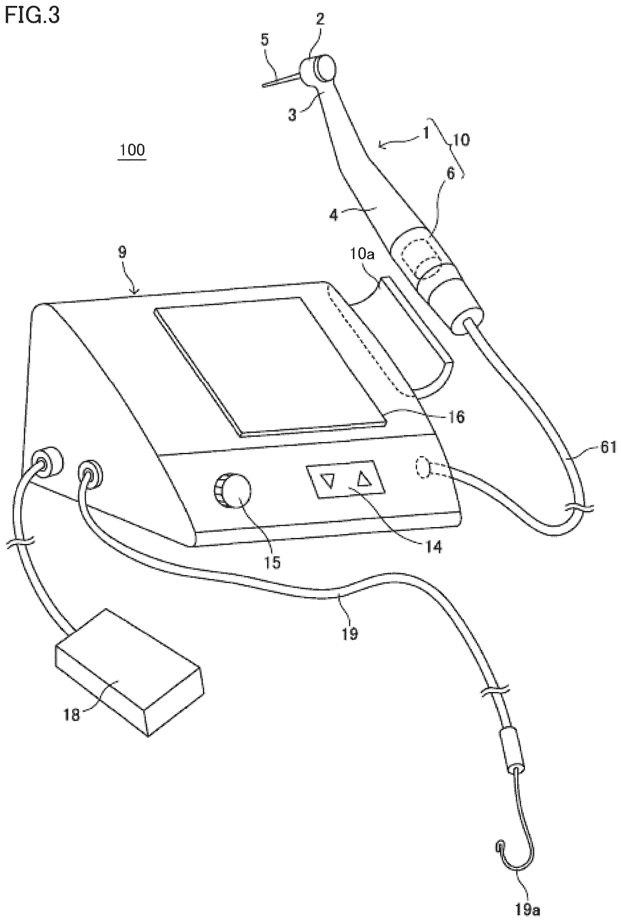

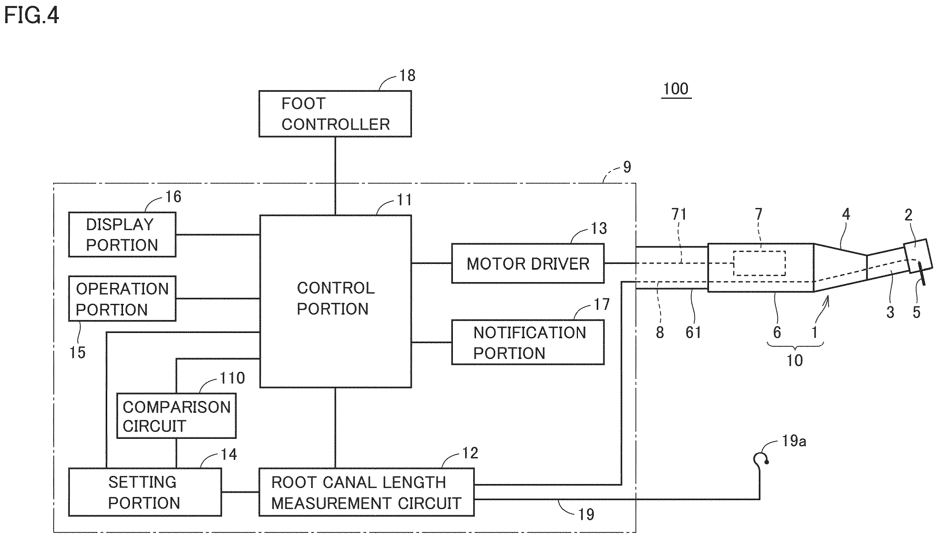

Next, a configuration of the root canal treatment apparatus will be described in detail. Fig. 3 is a schematic diagram showing a feature of appearance of the root canal treatment apparatus according to the first embodiment of the present invention. Fig. 4 is a block diagram showing a functional configuration of the root canal treatment apparatus according to the first embodiment of the present invention. A root canal treatment apparatus 100 shown in Fig. 3 includes a handpiece 1 for dental root canal treatment, a motor unit 6, and a control box 9.

Handpiece 1 for dental root canal treatment includes a head 2, a neck portion 3 small in diameter and continuous to head 2, and a grip portion 4 continuous to neck portion 3 and gripped with fingers. Motor unit 6 for rotatably driving a cutting tool 5 (a file or a reamer) held by head 2 is removably connected to a base portion of grip portion 4. A dental instrument 10 is constructed with motor unit 6 being coupled to handpiece 1.

As shown in Fig. 4, motor unit 6 contains a micromotor 7 and is coupled to control box 9 through a power supply lead 71 supplying power to micromotor 7 and a hose 61 containing a signal lead 8 transmitting a signal to a root canal length measurement circuit 12 which will be described later. Signal lead 8 is a part of a conductor electrically connected to cutting tool 5 with motor unit 6 and handpiece 1 being interposed and transmitting an electric signal. Cutting tool 5 serves as one electrode of root canal length measurement circuit 12.

Control box 9 includes a control portion 11, a comparison circuit 110, a root canal length measurement circuit 12, a motor driver 13, a setting portion 14, an operation portion 15, a display portion 16, and a notification portion 17. As shown in Fig. 3, a holder 10a for holding instrument 10 while the instrument is not used is attached to control box 9 in a side portion of a main body. In control box 9, a foot controller 18 is coupled to control portion 11 and a lead 19 is coupled to root canal length measurement circuit 12. Though lead 19 is pulled out of control box 9, it may be pulled out as being branched from a point intermediate in hose 61. A mouth cavity electrode 19a placed over a lip of a patient is attached to a tip end of lead 19 as being electrically connected. Mouth cavity electrode 19a serves as the other electrode of root canal length measurement circuit 12.

Control portion 11 is responsible for overall control of the root canal enlargement and root canal length measurement system and a main portion thereof is implemented by a microcomputer. Comparison circuit 110, root canal length measurement circuit 12, motor driver 13, setting portion 14, operation portion 15, display portion 16, notification portion 17, and foot controller 18 are connected to control portion 11. Control portion 11 controls a direction of rotation of cutting tool 5 cutting an object to be cut. Specifically, control portion 11 controls drive to any of forward rotation drive for rotating cutting tool 5 clockwise (also called right rotation), reverse rotation drive for rotating cutting tool 5 counterclockwise (also called left rotation), and twist drive (reciprocal drive) for alternately rotating cutting tool 5 clockwise and counterclockwise. A direction of rotation of cutting tool 5 (clockwise or counterclockwise) is discussed with the direction from the side of cutting tool 5 attached to head 2 toward the tip end of cutting tool 5 being defined as the reference. Control portion 11 can control drive for rotating cutting tool 5 with parameters including an angle of rotation, a rotation speed, or an angular rotation speed (the number of rotations) in the clockwise direction and an angle of rotation, a rotation speed, or an angular rotation speed (the number of rotations) in the counterclockwise direction being changed.

An angle of rotation may be defined by a time period for rotation (also called a time period for drive) when an angular rotation speed (the number of rotations) is constant. An angle of rotation may be defined by an amount associated with drive of cutting tool 5 such as an amount of a drive current or an amount of torque. Though description will be given below with reference to an angle of rotation, it may be replaced with the number of times of rotation. For example, setting the number of times of rotations of cutting tool 5 to 1/2 rotation is the same in meaning as rotation of cutting tool 5 by 180 degrees. Drive of cutting tool 5 for 0.25 second with a rotation speed of cutting tool 5 being constant at 120 rotations per minute is the same in meaning as rotation of cutting tool 5 by 180 degrees. Strictly speaking, for example, correspondence between a time period for rotation in terms of control and an actual angle of rotation may have to be corrected depending on a load applied to cutting tool 5 or the motor, however, an amount of correction is extremely small and hence it is ignorable in carrying out the present invention. In a subsequent embodiment, a speed of rotation of cutting tool 5 is expressed as the number of rotations. The number of rotations is expressed in a unit of rotations per minute (rpm).

Comparison circuit 110 is necessary for detecting a load applied to cutting tool 5 and can selectively be provided when detection of the load is necessary. Comparison circuit 110 can compare a load at any time point during rotation of cutting tool 5 clockwise or counterclockwise by motor driver 13. Specifically, comparison circuit 110 can compare a load applied to cutting tool 5 with a set load while or after cutting tool 5 is rotated by a prescribed angle of rotation (for example, 180 degrees) clockwise or counterclockwise.

Root canal length measurement circuit 12 is necessary for detecting a position of a tip end of cutting tool 5 in a root canal, and can selectively be provided when detection of the position is necessary. Root canal length measurement circuit 12 forms a closed circuit with cutting tool 5 inserted in a root canal of a tooth being defined as one electrode and mouth cavity electrode 19a placed over a lip of a patient being defined as the other electrode. Root canal length measurement circuit 12 can measure a distance from a position of a root apex of a tooth to the tip end of cutting tool 5 by measuring an impedance between cutting tool 5 and mouth cavity electrode 19a by applying a measurement voltage across cutting tool 5 and mouth cavity electrode 19a. When root canal length measurement circuit 12 detects the tip end of cutting tool 5 reaching the position of the root apex, an amount of insertion of cutting tool 5, that is, the distance from a mouth of the root canal to the tip end of cutting tool 5, can be defined as a root canal length. An electric root canal length measurement method for measuring a root canal length by measuring an impedance between cutting tool 5 and mouth cavity electrode 19a has been known, and all known electric root canal length measurement methods are applicable to root canal treatment apparatus 100 according to the first embodiment.

Motor driver 13 is connected to micromotor 7 through power supply lead 71 and controls power supplied to micromotor 7 based on a control signal from control portion 11. Motor driver 13 controls a direction of rotation, the number of rotations, and an angle of rotation of micromotor 7, that is, a direction of rotation, the number of rotations, and an angle of rotation of cutting tool 5, by controlling power supplied to micromotor 7. In root canal treatment apparatus 100, at least motor driver 13 and micromotor 7 form a drive portion.

Setting portion 14 sets the reference for controlling a direction of rotation, an angular rotation speed (the number of rotations), and an angle of rotation of cutting tool 5. Setting portion 14 sets a set load (load for switching drive such as stopping drive of cutting tool 5 or rotating cutting tool 5 in the reverse rotation direction) compared by comparison circuit 110 with a load applied to cutting tool 5, and timing. Setting portion 14 can set in advance with root canal length measurement circuit 12, a position of a root apex as a set position. Root canal treatment apparatus 100 can change a parameter including a direction of rotation, the number of rotations, and an angle of rotation of cutting tool 5 when the tip end of cutting tool 5 reaches the set position, by setting the set position in advance with setting portion 14.

Operation portion 15 sets a parameter including an angular rotation speed (the number of rotations), an angle of rotation, a set load, and a set position of cutting tool 5 and can also set selection as to whether or not to measure a root canal length. Operation portion 15 can allow manual switching between forward rotation drive and reverse rotation drive or switching between forward rotation drive and twist drive.

As will be described later, display portion 16 shows a position of the tip end of cutting tool 5 in a root canal or a direction of rotation, the number of rotations, and an angle of rotation of cutting tool 5. Display portion 16 can also show information given from notification portion 17 to an operator.

Notification portion 17 gives a notification about a state of drive of cutting tool 5 currently caused by control portion 11 through light, sound, or vibration. Furthermore, notification portion 17 can notify an operator of performing drive for reversely rotating cutting tool 5 by a set angle and then stopping rotation. Therefore, the operator can recognize that the tip end of cutting tool 5 has stopped at a position of a root apex, and determine a working length using a rubber stop. In addition, the operator can recognize that biting of a blade of cutting tool 5 into a root canal wall has been released, and pull cutting tool 5 out of a root canal. Specifically, notification portion 17 is provided with an LED, a speaker, or an oscillator as necessary for giving a notification about a state of drive of cutting tool 5, and changes a color of the LED emitting light or changes sound output from the speaker between drive in the forward rotation direction and drive in the reverse rotation direction. When display portion 16 can show a state of drive of cutting tool 5 to an operator, notification portion 17 does not have to separately include an LED, a speaker, or an oscillator.

Foot controller 18 is an operation portion with which drive and control of cutting tool 5 by micromotor 7 is indicated through a stepping operation. Drive and control of cutting tool 5 by micromotor 7 is not limited to drive and control with foot controller 18. An operation switch (not shown) may be provided in grip portion 4 of handpiece 1 and cutting tool 5 may be driven and controlled by using both of the operation switch and foot controller 18. For example, when root canal length measurement circuit 12 detects insertion of cutting tool 5 into a root canal while an operation to step on foot controller 18 is performed, rotation of cutting tool 5 may be started.

Though control box 9 of root canal treatment apparatus 100 is used as being placed on a tray table or a side table set at a side portion of a dental treatment couch, the present invention is not limited as such and control box 9 may be incorporated in the tray table or the side table.

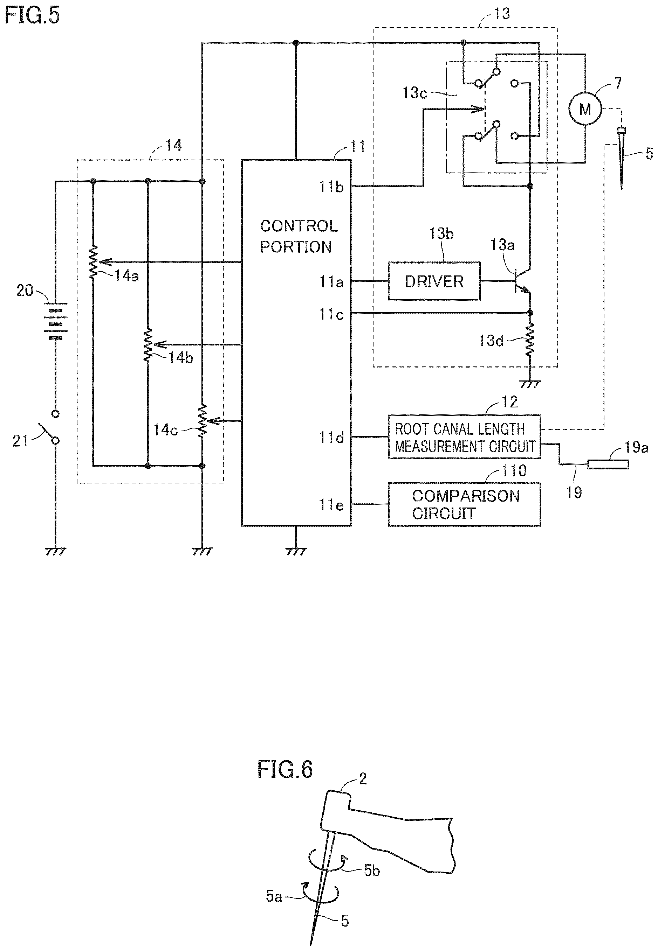

A circuit configuration of root canal treatment apparatus 100 driving and controlling cutting tool 5 will now be described in further detail. Fig. 5 is a circuit diagram showing a circuit configuration of root canal treatment apparatus 100 according to the first embodiment of the present invention. In connection with root canal treatment apparatus 100 shown in Fig. 5, micromotor 7 involved with drive and control of cutting tool 5, control portion 11, comparison circuit 110, root canal length measurement circuit 12, motor driver 13, and setting portion 14 are shown.

Motor driver 13 includes a transistor switch 13a, a transistor driver circuit 13b, a rotation direction switch 13c, and a load detection resistor 13d. Though rotation direction switch 13c is described as a relay element, a motor drive circuit may be configured with a semiconductor switching element such as an FET. Setting portion 14 includes a load (set load) setting variable resistor 14a, a duty setting variable resistor 14b, and a position (set position) setting variable resistor 14c. Though setting portion 14 includes also a feature setting an angle of rotation (or a time period for rotation) indicating timing of comparison between a detected load and a set load by comparison circuit 110, Fig. 5 does not show such a feature. Root canal treatment apparatus 100 shown in Fig. 5 is connected to a main power supply 20 and a main switch 21. Cutting tool 5 is held by micromotor 7 with an appropriate gear mechanism being interposed, although it is not shown.

Transistor driver circuit 13b is activated by a control signal output from a port 1 la of control portion 11, controls on and off of transistor switch 13a, and drives micromotor 7. Micromotor 7 rotates clockwise or counterclockwise in accordance with a state of rotation direction switch 13c. When a control signal output from port 11a of control portion 11 has a waveform of pulses, for example, as being repeated in a certain period, a width of the waveform of the pulses, that is, a duty ratio, is adjusted by duty setting variable resistor 14b of setting portion 14. Micromotor 7 drives cutting tool 5 at the number of rotations corresponding to the duty ratio.

Rotation direction switch 13c switches between drive of cutting tool 5 in the clockwise direction and drive in the counterclockwise direction in accordance with a control signal output from a port 11b of control portion 11. Control portion 11 detects a load applied to cutting tool 5 based on an amount of a current (or a voltage value) from load detection resistor 13d input to a port 11c. Therefore, load detection resistor 13d functions as a load detector detecting a load applied to cutting tool 5. The load detector is not limited to a feature detecting a load applied to cutting tool 5 based on an amount of a current (or a voltage value) from load detection resistor 13d, but may be implemented by another feature such as a feature detecting a load applied to cutting tool 5 by providing a torque sensor in a portion driving cutting tool 5. A detected load is converted, for example, into a value for torque applied to cutting tool 5 by control portion 11 and shown on display portion 16. Comparison circuit 110 compares the torque value resulting from conversion by control portion 11 with a torque value set by load setting variable resistor 14a. Comparison circuit 110 may naturally directly compare an amount of a current (or a voltage value) from load detection resistor 13d with an amount of a current (or a voltage value) from variable resistor 14a without conversion into a torque value.

Control portion 11 receives input of a root canal length measured with root canal length measurement circuit 12 at a port 11d. Therefore, root canal length measurement circuit 12 functions as a position detector detecting a position of the tip end of cutting tool 5 in a root canal. Control portion 11 outputs a load applied to cutting tool 5 and detected by the load detector from a port 11e to comparison circuit 110, and receives input of a result of comparison resulting from comparison with the set load by comparison circuit 110 at port 11e. Therefore, comparison circuit 110 functions as a load comparison portion comparing a load detected by the load detector with the set load. Control portion 11 may be configured such that the features described as analog circuits may be integrated as software in one micro computer.

Fig. 6 is a schematic diagram showing a direction of rotation of cutting tool 5. In connection with the direction of rotation of cutting tool 5 shown in Fig. 6, drive in a clockwise direction 5a in which cutting tool 5 is rotated to the right when viewed from the side of cutting tool 5 attached to head 2 toward the tip end of cutting tool 5 (forward rotation drive) and drive in a counterclockwise direction 5b in which the cutting tool is rotated to the left (reverse rotation drive) are shown. Such drive that drive for rotating cutting tool 5 clockwise 5a by a predetermined angle of rotation and drive for rotating cutting tool 5 counterclockwise 5b by a predetermined angle of rotation are alternately performed is defined as twist drive.

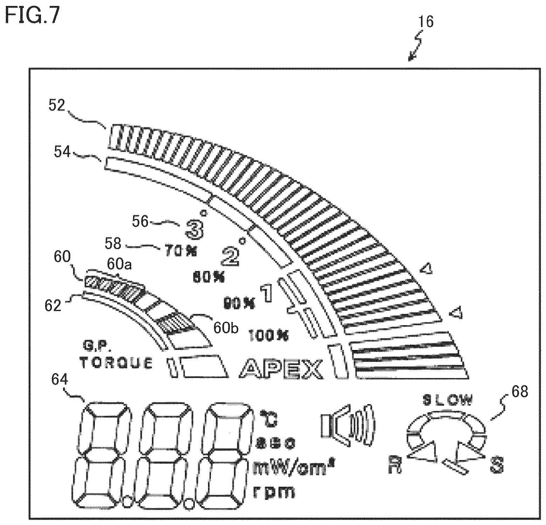

Representation on a liquid crystal display panel provided in display portion 16 shown in Fig. 3 will now be described. Fig. 7 is a diagram showing an example of representation on the liquid crystal display panel provided in display portion 16 shown in Fig. 3.

Display portion 16 shown in Fig. 7 is implemented by a liquid crystal display panel, and includes a dot display portion 52 including a number of elements for showing a measured root canal length in detail, a zone display portion 54 for showing stepwise a root canal length in a plurality of divided zones, a boundary display portion 56 showing a boundary between zones, and a proximity display portion 58 showing proximity to a root apex as a ratio.

Dot display portion 52 shows elements sequentially downward from the top as the tip end of cutting tool 5 is closer to the root apex. A position indicated by a mark "APEX" indicates a position of the root apex, and the element reaching the mark indicates that the tip end of cutting tool 5 has substantially reached the position of the root apex. Representation on dot display portion 52 is by way of example and may be representation on meter 50 shown in Fig. 1.

Display portion 16 includes a dot display portion 60 including a number of elements for showing a load detected by the load detector (load detection resistor 13d, see Fig. 5) and a zone display portion 62 for showing stepwise a load in a plurality of divided zones. Dot display portion 60 shows elements sequentially downward from the top as a load detected by the load detector is higher.

For example, dot display portion 60 shows with an element 60a shown with hatching, a load on cutting tool 5 applied when a tooth is cut. Dot display portion 60 may have a peak holding function in order to prevent representation from frequently changing and it may show for a certain period of time, a maximum value for the load detected within a prescribed period of time.

Dot display portion 60 may show an element 60b corresponding to the set load set by setting portion 14 (see Fig. 5). By showing element 60b on dot display portion 60, how much margin is left for a load detected by the load detector with respect to the set load can be visualized.

Display portion 16 further includes a numeric value display portion 64 showing the number of rotations of cutting tool 5 or a load applied to cutting tool 5 with a numeric value and a rotary display portion 68 showing a direction of rotation of cutting tool 5 (clockwise or counterclockwise) and magnitude of the number of rotations of cutting tool 5.

As described above, root canal treatment apparatus 100 according to the first embodiment includes: handpiece 1 configured to hold cutting tool 5 in head 2 in a drivable manner; motor driver 13 and micromotor 7 configured to drive cutting tool 5; root canal length measurement circuit 12; and control portion 11. Root canal length measurement circuit 12 is configured to electrically detect the position of the tip end of cutting tool 5 in the root canal, using cutting tool 5 as a measuring electrode. Control portion 11 is configured to control motor driver 13 and micromotor 7 so as to perform drive for reversely rotating cutting tool 5 by a predetermined set angle (for example, 180 degrees) when the position of the tip end of cutting tool 5 detected by root canal length measurement circuit 12 reaches predetermined set position 50b as shown in Fig. 1(b), and then, stopping rotation. Therefore, in root canal treatment apparatus 100 according to the first embodiment, push-back of shavings in the direction of the root apex (particularly, push-out of contaminated shavings from a portion close to the root apex) can be avoided, and biting of the blade of cutting tool 5 into the root canal wall can be released, which makes it easy to pull cutting tool 5 out of the root canal. Control portion 11 may perform drive for stopping rotation of cutting tool 5 when the position of the tip end of cutting tool 5 detected by root canal length measurement circuit 12 reaches predetermined set position 50b, and then, reversely rotating cutting tool 5 by the predetermined set angle, and then, stopping rotation.

In addition, the set angle is any one of angles ranging from 30 degrees to 720 degrees. Therefore, the angle required to release biting of the blade of cutting tool 5 into the root canal wall can be ensured, and an amount of shavings pushed back in the direction of set position 50b can be reduced.

Furthermore, control portion 11 controls motor driver 13 and micromotor 7 so as to perform drive for forwardly rotating cutting tool 5 until the position of the tip end of cutting tool 5 reaches set position 50b as shown in Fig. 1(b). Therefore, high cutting efficiency can be maintained.

Moreover, control portion 11 can preliminarily set the number of rotations of cutting tool 5 to be driven, and can change the set angle in accordance with the set number of rotations. For example, the degree of biting of the blade into the root canal wall varies depending on the set number of rotations. Therefore, control portion 11 changes the set angle in accordance with the degree, thereby reliably releasing biting of the blade of cutting tool 5 into the root canal wall.

Furthermore, when the load detector detects a load applied to cutting tool 5, the control portion can change the set angle in accordance with the detected load. For example, in root canal treatment apparatus 100, when the position of the tip end of cutting tool 5 reaches set position 50b, the load detector may detect a load applied to cutting tool 5, and when the detected load is higher than a predetermined load, the set angle may be changed to become greater. When the detected load is higher than the predetermined load, it may be impossible to release biting of the blade of cutting tool 5 into the root canal wall even if drive for reversely rotating cutting tool 5 by the set angle is performed. Therefore, in root canal treatment apparatus 100, the set angle can be changed to become greater, thereby reliably releasing cutting tool 5. On the other hand, when the detected load is lower than the predetermined load, biting of the blade of cutting tool 5 into the root canal wall can be released even if drive for reversely rotating cutting tool 5 by the set angle is not performed. Therefore, in root canal treatment apparatus 100, the set angle is changed to become smaller, thereby releasing cutting tool 5 and reducing an amount of shavings pushed back in the direction of the root apex (particularly, an amount of contaminated shavings pushed out of a portion close to the root apex).

### (Second Embodiment)

In the root canal treatment apparatus according to the first embodiment, cutting tool 5 is reversely rotated by the predetermined set angle (for example, 180 degrees) when the position of the tip end of cutting tool 5 reaches predetermined set position 50b, and then, rotation is stopped. However, in a root canal treatment apparatus according to a second embodiment of the present invention, control for performing drive for reversely rotating cutting tool 5 by a set angle, and then, detecting a load applied to cutting tool 5 is carried out. Though the configuration of the root canal treatment apparatus according to the second embodiment has a different type of control, the configuration of the root canal treatment apparatus according to the second embodiment is basically similar to the configuration of the root canal treatment apparatus according to the first embodiment, and thus, detailed description will not be repeated and only the different type of control will be described. The reference numerals assigned to the configuration of the root canal treatment apparatus according to the first embodiment are also applied to the configuration of the root canal treatment apparatus according to the second embodiment.

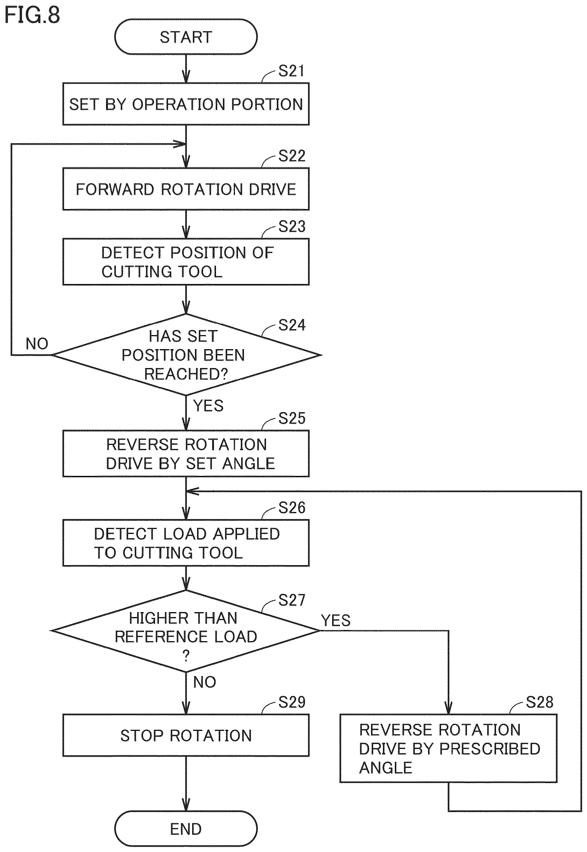

Control in root canal treatment apparatus 100 according to the second embodiment will be described with reference to a flowchart. Fig. 8 is a flowchart for illustrating control in root canal treatment apparatus 100 according to the second embodiment of the present invention. First, root canal treatment apparatus 100 (mainly control portion 11, and the same applies to the following description) stores parameters including a set angle, a set position, the set number of rotations, and a reference load that are set by an operator operating operation portion 15 (step S21). Specifically, a value of a load that makes it possible to determine that biting of the blade of cutting tool 5 into the root canal wall has been released is set as the reference load. The reference load may be preliminarily set during manufacturing, such that the operator does not need to set the reference load by operating operation portion 15.

Next, root canal treatment apparatus 100 performs drive for rotating cutting tool 5 in the forward rotation direction, based on an operation to start drive by an operator (step S22). Root canal treatment apparatus 100 electrically detects a position of the tip end of cutting tool 5 using root canal length measurement circuit 12, while rotating cutting tool 5 in the forward rotation direction (step S23). Root canal treatment apparatus 100 determines whether or not the position of the tip end of cutting tool 5 detected in step S23 has reached the set position (step S24). When determining that the position of the tip end of cutting tool 5 has not yet reached the set position (NO in step S24), root canal treatment apparatus 100 returns the process to step S22 in order to maintain drive for rotating cutting tool 5 in the forward rotation direction.

When determining that the position of the tip end of cutting tool 5 has reached the set position (YES in step S24), root canal treatment apparatus 100 performs drive for reversely rotating cutting tool 5 by the set angle (step S25). Root canal treatment apparatus 100 detects a load applied to cutting tool 5 during or after drive for reversely rotating cutting tool 5 (step S26). A maximum value of loads detected by load detection resistor 13d during drive in the reverse rotation direction (during the set angle), an average value thereof, or at least one of a plurality of detected load values may be used as the load applied to cutting tool 5.

Next, root canal treatment apparatus 100 determines whether or not the load applied to cutting tool 5 and detected in step S26 is higher than the reference load (step S27). When the load applied to cutting tool 5 is higher than the reference load (YES in step S27), root canal treatment apparatus 100 performs drive for further reversely rotating cutting tool 5 by a prescribed angle (step S28). That is, root canal treatment apparatus 100 determines that biting of the blade of cutting tool 5 into the root canal wall has not yet been released in spite of reverse rotation of cutting tool 5 by the set angle, and further reversely rotates cutting tool 5 by the prescribed angle (for example, 90 degrees). By further reversely rotating cutting tool 5 by the prescribed angle, root canal treatment apparatus 100 can release biting of the blade of cutting tool 5 into the root canal wall. The prescribed angle may be smaller than the set angle, or may be greater than the set angle.

After reversely rotating cutting tool 5 by the prescribed angle in step S28, root canal treatment apparatus 100 returns the process to step S26 and again detects the load applied to cutting tool 5. When the load applied to cutting tool 5 and detected again is still higher than the reference load (YES in step S27), root canal treatment apparatus 100 again performs drive for reversely rotating cutting tool 5 by the prescribed angle. That is, cutting tool 5 continues to be reversely rotated by the prescribed angle in step S28 until the load applied to cutting tool 5 becomes equal to or smaller than the reference load.

On the other hand, when the load applied to cutting tool 5 is equal to or smaller than the reference load (NO in step S27), the root canal treatment apparatus stops rotation of cutting tool 5 (step S29).

As described above, in root canal treatment apparatus 100 according to the second embodiment, control portion 11 carries out control so as to add drive for reversely rotating cutting tool 5 by the prescribed angle (certain angle) in accordance with the load detected by the load detector (step S26) during drive for reversely rotating cutting tool 5 by the set angle. Therefore, in root canal treatment apparatus 100 according to the second embodiment, cutting tool 5 can be reliably released regardless of the degree of biting of the blade into the root canal wall.

### (Third Embodiment)

In root canal treatment apparatus 100 according to the second embodiment, control for performing drive for reversely rotating cutting tool 5 by the set angle when the position of the tip end of cutting tool 5 has reached predetermined set position 50b, and then, detecting the load applied to cutting tool 5 is carried out. However, in a root canal treatment apparatus according to a third embodiment of the present invention, control for detecting the load applied to cutting tool 5 during drive for forwardly rotating cutting tool 5 is carried out. Though the configuration of the root canal treatment apparatus according to the third embodiment has a different type of control, the configuration of the root canal treatment apparatus according to the third embodiment is basically similar to the configuration of the root canal treatment apparatus according to the first embodiment, and thus, detailed description will not be repeated and only the different type of control will be described. The reference numerals assigned to the configuration of the root canal treatment apparatus according to the first embodiment are also applied to the configuration of the root canal treatment apparatus according to the third embodiment.

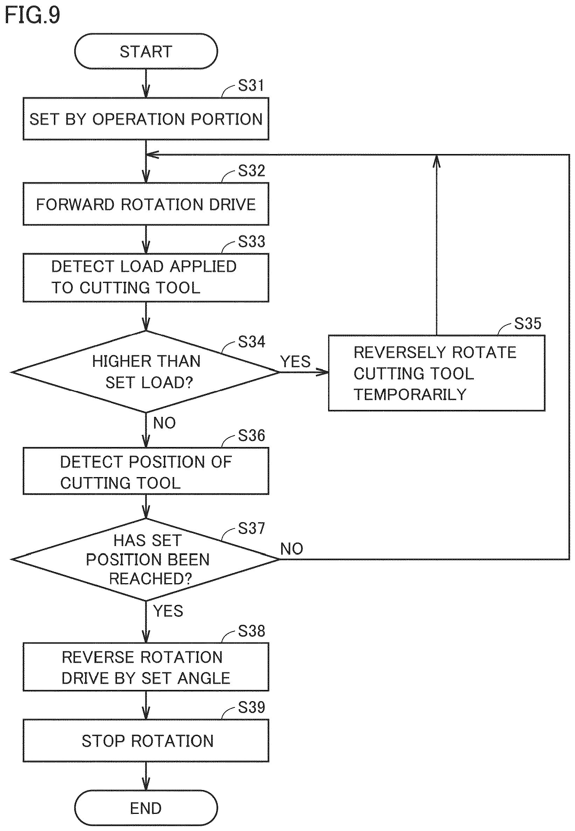

Control in root canal treatment apparatus 100 according to the third embodiment will be described with reference to a flowchart. Fig. 9 is a flowchart for illustrating control in root canal treatment apparatus 100 according to the third embodiment of the present invention. First, root canal treatment apparatus 100 (mainly control portion 11, and the same applies to the following description) stores parameters including a set angle, a set position, the set number of rotations, and a set load that are set by an operator operating operation portion 15 (step S31). Specifically, in order to prevent breakage of cutting tool 5, a value of a load that makes it possible to determine that excessive force is applied to cutting tool 5 is set as the set load. The set load may be preliminarily set during manufacturing, such that the operator does not need to set the set load by operating operation portion 15.

Next, root canal treatment apparatus 100 performs drive for rotating cutting tool 5 in the forward rotation direction, based on an operation to start drive by an operator (step S32). Root canal treatment apparatus 100 detects a load applied to cutting tool 5 during drive for forwardly rotating cutting tool 5 (step S33). A maximum value of loads detected by load detection resistor 13d over a certain time period during drive in the forward rotation direction, an average value thereof, or at least one of a plurality of detected load values may be used as the load applied to cutting tool 5.

Next, root canal treatment apparatus 100 determines whether or not the load applied to cutting tool 5 and detected in step S33 is higher than the set load (step S34). When the load applied to cutting tool 5 is higher than the set load (YES in step S34), root canal treatment apparatus 100 performs drive for reversely rotating cutting tool 5 temporarily (step S35). That is, root canal treatment apparatus 100 reversely rotates cutting tool 5 temporarily in order to prevent breakage of cutting tool 5. Drive for reversely rotating cutting tool 5 temporarily may be defined by an angle of reverse rotation (for example, 360 degrees), or may be defined by a time of reverse rotation (for example, 2 seconds).

After reversely rotating cutting tool 5 temporarily in step S35, root canal treatment apparatus 100 returns the process to step S32 and again performs drive for rotating cutting tool 5 in the forward rotation direction. When the load applied to cutting tool 5 and detected in step S33 is again higher than the set angle after drive for rotating cutting tool 5 in the forward rotation direction is performed again (YES in step S34), drive for reversely rotating cutting tool 5 temporarily is performed again. That is, unless the load applied to cutting tool 5 becomes equal to or lower than the set load, drive for rotating cutting tool 5 in the forward rotation direction cannot be performed. When the load applied to cutting tool 5 is higher than the set load as a result of one or a plurality of number of times of determination in step S34, root canal treatment apparatus 100 may stop rotation of cutting tool 5.

On the other hand, when the load applied to cutting tool 5 is equal to or lower than the set load (NO in step S34), root canal treatment apparatus 100 electrically detects a position of the tip end of cutting tool 5 using root canal length measurement circuit 12, while rotating cutting tool 5 in the forward rotation direction (step S36). Root canal treatment apparatus 100 determines whether or not the position of the tip end of cutting tool 5 detected in step S36 has reached the set position (step S37). When determining that the position of the tip end of cutting tool 5 has not yet reached the set position (NO in step S37), root canal treatment apparatus 100 returns the process to step S32 in order to maintain drive for rotating cutting tool 5 in the forward rotation direction.

When determining that the position of the tip end of cutting tool 5 has reached the set position (YES in step S37), root canal treatment apparatus 100 performs drive for reversely rotating cutting tool 5 by the set angle (step S38). Furthermore, after reversely rotating cutting tool 5 by the set angle in step S38, the root canal treatment apparatus stops rotation of cutting tool 5 (step S39). Root canal treatment apparatus 100 may perform the processing for reversely rotating cutting tool 5 by the set angle in step S3 8, and then, perform the processing in steps S26 to S28 described in the second embodiment.

As described above, in root canal treatment apparatus 100 according to the third embodiment, when the detected load is higher than the set load, the control portion carries out control so as to perform drive for reversely rotating cutting tool 5 temporarily or drive for stopping rotation. Therefore, in root canal treatment apparatus 100 according to the third embodiment, breakage of cutting tool 5 can be prevented.

### (Fourth Embodiment)

In the root canal treatment apparatus according to the first embodiment, cutting tool 5 is reversely rotated by the predetermined set angle (for example, 180 degrees) when the position of the tip end of cutting tool 5 has reached predetermined set position 50b, and then, rotation is stopped. However, the position of the tip end of cutting tool 5 may be displaced from set position 50b toward the tooth crown side by an amount corresponding to reverse rotation of cutting tool 5 by the set angle. Particularly, when the set angle is great, the displacement of the position of the tip end of cutting tool 5 from set position 50b may be unacceptable. Thus, a root canal treatment apparatus according to a fourth embodiment of the present invention performs drive for stopping rotation, and then, again rotating cutting tool 5 in the forward rotation direction in order to return the position of the tip end of cutting tool 5 to set position 50b, and then, stopping rotation. Though the configuration of the root canal treatment apparatus according to the fourth embodiment has a different type of control, the configuration of the root canal treatment apparatus according to the fourth embodiment is basically similar to the configuration of the root canal treatment apparatus according to the first embodiment, and thus, detailed description will not be repeated and only the different type of control will be described. The reference numerals assigned to the configuration of the root canal treatment apparatus according to the first embodiment are also applied to the configuration of the root canal treatment apparatus according to the fourth embodiment.

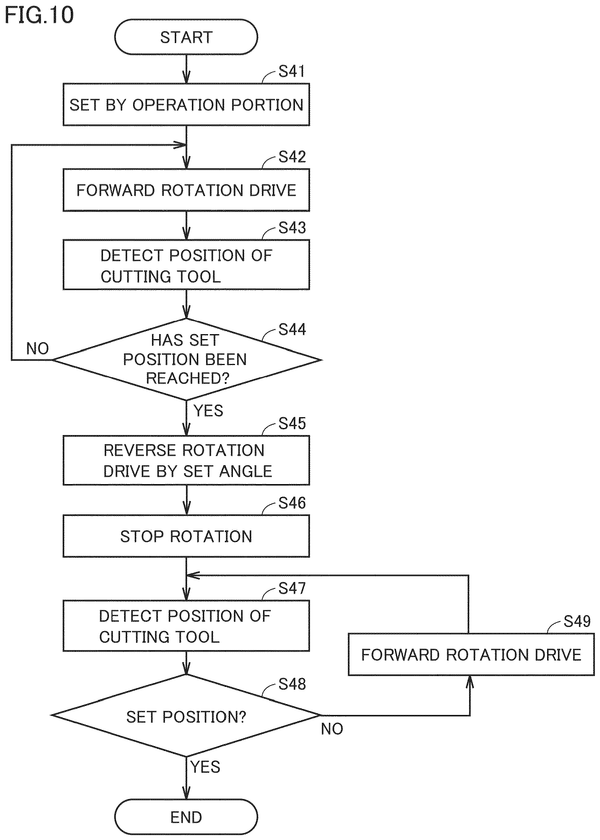

Control in root canal treatment apparatus 100 according to the fourth embodiment will be described with reference to a flowchart. Fig. 10 is a flowchart for illustrating control in root canal treatment apparatus 100 according to the fourth embodiment of the present invention. First, root canal treatment apparatus 100 (mainly control portion 11, and the same applies to the following description) stores parameters including a set angle, a set position, the set number of rotations, and a reference load that are set by an operator operating operation portion 15 (step S41).

Next, root canal treatment apparatus 100 performs drive for rotating cutting tool 5 in the forward rotation direction, based on an operation to start drive by an operator (step S42). Root canal treatment apparatus 100 electrically detects a position of the tip end of cutting tool 5 using root canal length measurement circuit 12, while rotating cutting tool 5 in the forward rotation direction (step S43). Root canal treatment apparatus 100 determines whether or not the position of the tip end of cutting tool 5 detected in step S43 has reached the set position (step S44). When determining that the position of the tip end of cutting tool 5 has not yet reached the set position (NO in step S44), root canal treatment apparatus 100 returns the process to step S42 in order to maintain drive for rotating cutting tool 5 in the forward rotation direction.

When determining that the position of the tip end of cutting tool 5 has reached the set position (YES in step S44), root canal treatment apparatus 100 performs drive for reversely rotating cutting tool 5 by the set angle (step S45). Then, the root canal treatment apparatus stops rotation of cutting tool 5 (step S46).

Next, at the position where rotation of cutting tool 5 is stopped, root canal treatment apparatus 100 electrically detects the position of the tip end of cutting tool 5 using root canal length measurement circuit 12 (step S47). Root canal treatment apparatus 100 determines whether or not the position of the tip end of cutting tool 5 detected in step S47 is at the set position (step S48). It may be determined that the position of the tip end of cutting tool 5 is at the set position, as long as the position of the tip end of cutting tool 5 is within an acceptable range from the set position. When the position of the tip end of cutting tool 5 is at the set position (YES in step S48), root canal treatment apparatus 100 ends the process with rotation of cutting tool 5 being kept in a stopped state.

On the other hand, when the position of the tip end of cutting tool 5 is not at the set position (NO in step S48), root canal treatment apparatus 100 again performs drive for rotating cutting tool 5 in the forward rotation direction in order to return the position of the tip end of cutting tool 5 to set position 50b (step S49). Root canal treatment apparatus 100 electrically detects the position of the tip end of cutting tool 5 using root canal length measurement circuit 12, while rotating cutting tool 5 in the forward rotation direction (step S47), and thus, root canal treatment apparatus 100 can return the position of the tip end of cutting tool 5 to set position 50b. In rotation drive in step S49, the rotation speed may be reduced as compared with normal rotation drive.

As described above, in root canal treatment apparatus 100 according to the fourth embodiment, control portion 11 performs drive for reversely rotating cutting tool 5 by the set angle when the position of the tip end of the cutting tool detected by root canal length measurement circuit 12 has reached the set position, and further reversely rotating the cutting tool, and then, forwardly rotating cutting tool 5 until the position of the tip end of cutting tool 5 returns to the set position, and then, stopping rotation. Therefore, in root canal treatment apparatus 100 according to the fourth embodiment, the position of the tip end of cutting tool 5 is at the set position (for example, the position of the root apex), and thus, a working length can also be determined using a rubber stop.

### (Modification)

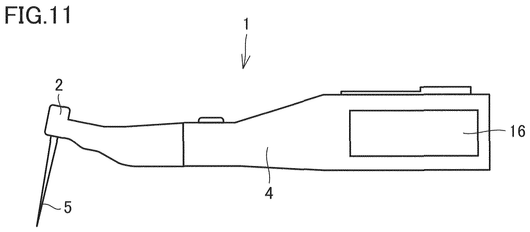

Though the configuration of root canal treatment apparatus 100 according to the first to fourth embodiments in which handpiece 1 is coupled to control box 9 through hose 61 has been described, the present invention is not limited as such and may be configured as a root canal treatment apparatus of a cordless type. Fig. 11 is a schematic diagram showing a configuration of the root canal treatment apparatus of the cordless type. The root canal treatment apparatus of the cordless type shown in Fig. 11 incorporates a battery pack, a micromotor, and a control system corresponding to a control box in grip portion 4 of handpiece 1, with various operation portions being provided on a surface of grip portion 4. The root canal treatment apparatus of the cordless type further includes display portion 16 and a not-shown notification portion in grip portion 4. Therefore, an operator can check, on display portion 16, information such as whether cutting tool 5 is driven in the cutting direction (forward rotation direction) or in the non-cutting direction (reverse rotation direction), where cutting tool 5 is currently located, how much load is applied to cutting tool 5, how high the number of rotations is, or reversely rotating cutting tool 5 by the set angle and then stopping rotation, without greatly changing a line of sight. Though not shown, lead 19 for mouth cavity electrode 19a may be pulled out of grip portion 4.

Though micromotor 7 is employed as a source of motive power for driving cutting tool 5 in root canal treatment apparatus 100 according to the first to fourth embodiments, the present invention is not limited as such and another drive source such as an air motor may be provided.

Furthermore, though root canal treatment apparatus 100 according to the first to fourth embodiments has been described as performing drive for forwardly rotating cutting tool 5 until the position of the tip end of cutting tool 5 reaches set position 50b, the present invention is not limited as such and drive (twist drive) for alternately performing drive for forwardly rotating cutting tool 5 and drive for reversely rotating cutting tool 5 may be performed. When twist drive is performed, drive for reversely rotating cutting tool 5 in twist drive may be used in place of drive for reversely rotating cutting tool 5 by the set angle when the position of the tip end of cutting tool 5 has reached set position 50b. That is, in twist drive, drive for reversely rotating cutting tool 5 in twist drive is invariably performed when the position of the tip end of cutting tool 5 has reached the set position, and then, rotation is stopped.

In addition, though root canal treatment apparatus 100 according to the first to fourth embodiments has been described as performing drive for reversely rotating cutting tool 5 by the set angle when the position of the tip end of cutting tool 5 has reached set position 50b, and then, stopping rotation of cutting tool 5, the present invention is not limited as such. For example, root canal treatment apparatus 100 may perform drive for stopping rotation of cutting tool 5 temporarily when the position of the tip end of cutting tool 5 has reached set position 50b, and then, reversely rotating cutting tool 5 by the set angle, and then, stopping rotation.

It should be understood that the embodiments disclosed herein are illustrative and non-restrictive in every respect. The scope of the present invention is defined by the claims, rather than the description above, and is intended to include any modifications within the scope of the claims.

### REFERENCE SIGNS LIST

1 handpiece; 2 head; 3 neck portion; 4 grip portion; 5 cutting tool; 6 motor unit; 7 micromotor; 8 signal lead; 9 control box; 10 instrument; 10a holder; 11 control portion; 11a to 11d port; 12 root canal length measurement circuit; 13 motor driver; 13a transistor switch; 13b transistor driver circuit; 13c rotation direction switch; 13d load detection resistor; 14 setting portion; 14a, 14b, 14c variable resistor; 15 operation portion; 16 display portion; 17 notification portion; 18 foot controller; 19 lead; 19a mouth cavity electrode; 20 main power supply; 21 main switch; 52, 60 dot display portion; 54, 62 zone display portion; 56 boundary display portion; 58 proximity display portion; 60a element; 61 hose; 64 numeric value display portion; 68 rotary display portion; 71 power supply lead; 100 root canal treatment apparatus; 110 comparison circuit.

## Claims

1. A root canal treatment apparatus (100) comprising:
a handpiece (1) configured to hold a cutting tool (5) in a head in a drivable manner;
a drive portion (6, 7, 13) configured to drive the cutting tool (5), with rotation in a direction in which the cutting tool (5) cuts an object to be cut being defined as forward rotation and rotation in a direction opposite to the forward rotation being defined as reverse rotation;
a root canal length measurement portion (12) configured to electrically detect a position of a tip end of the cutting tool (5) in a root canal, using the cutting tool (5) as a measuring electrode; and
a control portion (11) configured to control the drive portion (6, 7, 13) so as to perform drive for forwardly rotating the cutting tool (5) or perform drive for forwardly rotating and reversely rotating the cutting tool (5) until the position of the tip end of the cutting tool (5) reaches a predetermined set position and further so as to perform drive for reversely rotating the cutting tool (5) by a predetermined set angle, wherein the set angle is any one of angles ranging from 30 degrees to 720 degrees, when the position of the tip end of the cutting tool (5) detected by the root canal length measurement portion (12) reaches the predetermined set position, and then, stopping rotation so as to enable to pull the cutting tool (5) out of the root canal,
the root canal treatment apparatus (100) further comprising
a load detector (13d) configured to detect a load applied to the cutting tool (5), **characterized in that**
the control portion (11) changes the set angle in accordance with the load detected by the load detector (13d).

2. The root canal treatment apparatus according to claim 1, wherein
the control portion (11) can preliminarily set the number of rotations of the cutting tool (5) to be driven, and
the set angle is changed in accordance with the set number of rotations.

3. The root canal treatment apparatus (100) according to claim 1 or 2, wherein
the control portion (11) controls the drive portion (6, 7, 13) so as to add drive for reversely rotating the cutting tool (5) by a certain angle, in accordance with the load detected by the load detector (13d) during drive for reversely rotating the cutting tool (5) by the set angle.

4. The root canal treatment apparatus (100) according to any one of claims 1 to 3, wherein
the control portion (11) controls the drive portion (6, 7, 13) so as to perform drive for reversely rotating the cutting tool (5) temporarily or drive for stopping rotation, when the load detected by the load detector (13d) is higher than a set load.

5. The root canal treatment apparatus (100) according to any one of claims 1 to 4, wherein
the control portion (11) performs drive for stopping rotation of the cutting tool (5) when the position of the tip end of the cutting tool (5) detected by the root canal length measurement portion (12) reaches the predetermined set position, and then, reversely rotating the cutting tool (5) by the predetermined set angle, and then, stopping rotation.

6. The root canal treatment apparatus (100) according to any one of claims 1 to 5, wherein
the number of rotations in drive for reversely rotating the cutting tool (5) by the set angle is different from the number of rotations in drive for forwardly rotating the cutting tool (5).

7. The root canal treatment apparatus (100) according to any one of claims 1 to 6, further comprising
a notification portion (17) configured to notify a user that drive for reversely rotating the cutting tool (5) by the set angle and drive for stopping rotation have been performed.

8. The root canal treatment apparatus (100) according to claim 7, wherein
the notification portion (17) is a display portion (16) and is provided in the handpiece (1).

## Patentansprüche

1. Wurzelkanalbehandlungsvorrichtung (100), aufweisend:
ein Handstück (1), das konfiguriert ist, um ein Schneidwerkzeug (5) in einem Kopf antreibbar zu halten;
einen Antriebsteil (6, 7, 13), der konfiguriert ist, um das Schneidwerkzeug (5) anzutreiben, wobei eine Drehung in einer Richtung, in der das Schneidwerkzeug (5) ein zu schneidendes Objekt schneidet, als Vorwärtsdrehung definiert ist und eine Drehung in einer der Vorwärtsdrehung entgegengesetzten Richtung als Rückwärtsdrehung definiert ist;
einen Teil (12) zur Messung der Wurzelkanallänge, der konfiguriert ist, um unter Verwendung des Schneidwerkzeugs (5) als Messelektrode eine Position eines Spitzenendes des Schneidwerkzeugs (5) in einem Wurzelkanal elektrisch zu detektieren; und
einen Steuerungsteil (11), der konfiguriert ist, um den Antriebsteil (6, 7, 13) so zu steuern, um einen Antrieb zum Vorwärtsdrehen des Schneidwerkzeugs (5) durchzuführen oder einen Antrieb zum Vorwärtsdrehen und Rückwärtsdrehen des Schneidwerkzeugs (5) durchzuführen, bis die Position des Spitzenendes des Schneidwerkzeugs (5) eine vorbestimmte festgelegte Position erreicht, und ferner einen Antrieb zum Rückwärtsdrehen des Schneidwerkzeugs (5) um einen vorbestimmten festgelegten Winkel, wobei der festgelegte Winkel irgendeiner von Winkeln ist, die von 30 Grad bis 720 Grad reichen, wenn die durch den Teil (12) zur Messung der Wurzelkanallänge detektierte Position des Spitzenendes des Schneidwerkzeugs (5) die vorbestimmte festgelegte Position erreicht, und anschließenden Stoppen der Drehung, um das Herausziehen des Schneidwerkzeugs (5) aus dem Wurzelkanal zu ermöglichen, durchzuführen,
wobei die Wurzelkanalbehandlungsvorrichtung (100) ferner aufweist
einen Lastdetektor (13d), der konfiguriert ist, um eine auf das Schneidwerkzeug (5) ausgeübte Last zu detektieren, **dadurch gekennzeichnet, dass**
der Steuerungsteil (11) den festgelegten Winkel gemäß der durch den Lastdetektor (13d) detektierten Last ändert.

2. Wurzelkanalbehandlungsvorrichtung (100) nach Anspruch 1, wobei
der Steuerungsteil (11) die Anzahl an Drehungen des anzutreibenden Schneidwerkzeugs (5) vorläufig festlegen kann, und
der festgelegte Winkel gemäß der festgelegten Anzahl an Drehungen geändert wird.

3. Wurzelkanalbehandlungsvorrichtung (100) nach Anspruch 1 oder 2, wobei
der Steuerungsteil (11) den Antriebsteil (6, 7, 13) steuert, um einen Antrieb zum Rückwärtsdrehen des Schneidwerkzeugs (5) um einen bestimmten Winkel gemäß der durch den Lastdetektor (13d) detektierten Last während eines Antriebs zum Rückwärtsdrehen des Schneidwerkzeugs (5) um den festgelegten Winkel hinzuzufügen.

4. Wurzelkanalbehandlungsvorrichtung (100) nach einem der Ansprüche 1 bis 3, wobei
der Steuerungsteil (11) den Antriebsteil (6, 7, 13) steuert, um einen Antrieb zum zeitweiligen Rückwärtsdrehen des Schneidwerkzeugs (5) oder einen Antrieb zum Stoppen der Drehung durchzuführen, wenn die durch den Lastdetektor (13d) detektierte Last höher als eine festgelegte Last ist.

5. Wurzelkanalbehandlungsvorrichtung (100) nach einem der Ansprüche 1 bis 4, wobei
der Steuerungsteil (11) einen Antrieb durchführt, um eine Drehung des Schneidwerkzeugs (5) zu stoppen, wenn die durch den Teil (12) zur Messung der Wurzelkanallänge detektierte Position des Spitzenendes des Schneidwerkzeugs (5) die vorbestimmte festgelegte Position erreicht, und dann das Schneidwerkzeug (5) um den vorbestimmten festgelegten Winkel rückwärts zu drehen und danach eine Drehung zu stoppen.

6. Wurzelkanalbehandlungsvorrichtung (100) nach einem der Ansprüche 1 bis 5, wobei
sich die Anzahl an Drehungen bei einem Antrieb, um das Schneidwerkzeug (5) um den festgelegten Winkel rückwärts zu drehen, von der Anzahl an Drehungen bei einem Antrieb, um das Schneidwerkzeug (5) vorwärts zu drehen, unterscheidet.

7. Wurzelkanalbehandlungsvorrichtung (100) nach einem der Ansprüche 1 bis 6, ferner aufweisend
einen Benachrichtigungsteil (17), der konfiguriert ist, um einen Nutzer zu benachrichtigen, dass ein Antrieb zum Rückwärtsdrehen des Schneidwerkzeugs (5) um den festgelegten Winkel und ein Antrieb zum Stoppen der Drehung durchgeführt worden sind.

8. Wurzelkanalbehandlungsvorrichtung (100) nach Anspruch 7, wobei
der Benachrichtigungsteil (17) ein Anzeigeteil (16) ist und im Handstück (1) vorgesehen ist.

## Revendications

1. Appareil de traitement de canal radiculaire (100) comprenant :
une pièce à main (1) configurée pour tenir de manière entraînable un outil de coupe (5) dans une tête ;
une partie d'entraînement (6, 7, 13) configurée pour entraîner l'outil de coupe (5), une rotation dans une direction dans laquelle l'outil de coupe (5) coupe un objet à couper étant définie comme une rotation avant et une rotation dans une direction opposée à la rotation avant étant définie comme une rotation inversée ;
une partie de mesure de longueur de canal radiculaire (12) configurée pour détecter électriquement une position d'une extrémité de pointe de l'outil de coupe (5) dans un canal radiculaire, en utilisant l'outil de coupe (5) comme électrode de mesure ; et
une partie de commande (11) configurée pour commander la partie d'entraînement (6, 7, 13) de manière à réaliser un entraînement pour une rotation avant de l'outil de coupe (5) ou à réaliser un entraînement pour une rotation avant et une rotation inversée de l'outil de coupe (5) jusqu'à ce que la position de l'extrémité de pointe de l'outil de coupe (5) atteigne une position fixée prédéterminée et en outre de manière à réaliser un entraînement pour une rotation inversée de l'outil de coupe (5) suivant un angle fixé prédéterminé, dans lequel l'angle fixé est l'un quelconque des angles allant de 30 degrés à 720 degrés, quand la position de l'extrémité de pointe de l'outil de coupe (5) détectée par la partie de mesure de longueur de canal radiculaire (12) atteint la position fixée prédéterminée, puis à arrêter la rotation de manière à permettre de retirer l'outil de coupe (5) du canal radiculaire,
l'appareil de traitement de canal radiculaire (100) comprenant en outre
un détecteur de charge (13d) configuré pour détecter une charge appliquée à l'outil de coupe (5), **caractérisé en ce que**
la partie de commande (11) change l'angle fixé selon la charge détectée par le détecteur de charge (13d).

2. Appareil de traitement de canal radiculaire selon la revendication 1, dans lequel
la partie de commande (11) peut fixer préalablement le nombre de rotations de l'outil de coupe (5) à entraîner, et
l'angle fixé est changé selon le nombre de rotations fixé.

3. Appareil de traitement de canal radiculaire (100) selon la revendication 1 ou 2, dans lequel
la partie de commande (11) commande la partie d'entraînement (6, 7, 13) de manière à ajouter un entraînement pour la rotation inversée de l'outil de coupe (5) suivant un certain angle, selon la charge détectée par le détecteur de charge (13d) pendant l'entraînement pour une rotation inversée de l'outil de coupe (5) suivant l'angle fixé.

4. Appareil de traitement de canal radiculaire (100) selon l'une quelconque des revendications 1 à 3, dans lequel
la partie de commande (11) commande la partie d'entraînement (6, 7, 13) de manière à réaliser un entraînement pour une rotation inversée de l'outil de coupe (5) temporairement ou un entraînement pour arrêter la rotation, quand la charge détectée par le détecteur de charge (13d) est supérieure à une charge fixée.

5. Appareil de traitement de canal radiculaire (100) selon l'une quelconque des revendications 1 à 4, dans lequel
la partie de commande (11) réalise un entraînement pour l'arrêt de la rotation de l'outil de coupe (5) quand la position de l'extrémité de pointe de l'outil de coupe (5) détectée par la partie de mesure de longueur de canal radiculaire (12) atteint la position fixée prédéterminée, puis la rotation inversée de l'outil de coupe (5) suivant l'angle fixé prédéterminé, puis l'arrêt de la rotation.

6. Appareil de traitement de canal radiculaire (100) selon l'une quelconque des revendications 1 à 5, dans lequel
le nombre de rotations dans l'entraînement pour la rotation inversée de l'outil de coupe (5) suivant l'angle fixé est différent du nombre de rotations dans l'entraînement pour la rotation avant de l'outil de coupe (5).

7. Appareil de traitement de canal radiculaire selon l'une quelconque des revendications 1 à 6, comprenant en outre
une partie de notification (17) configurée pour notifier à un utilisateur que l'entraînement pour la rotation inversée de l'outil de coupe (5) suivant l'angle fixé et l'entraînement pour l'arrêt de la rotation ont été réalisés.

8. Appareil de traitement de canal radiculaire (100) selon la revendication 7, dans lequel
la partie de notification (17) est une partie d'affichage (16) et est prévue dans la pièce à main (1).
